# EUROPÄISCHE PATENTSCHRIFT

(11) **EP 1 201 908 B1**
(45) Veröffentlichungstag und Bekanntmachung des Hinweises auf die Patenterteilung: **08.12.2004**
(21) Anmeldenummer: 01124561.0
(22) Anmeldetag: 13.10.2001
(51) Int. Cl.: F02M 25/12

(54) **Vorrichtung und Verfahren zur Anreicherung des Sauerstoffgehaltes in der Ansaugluft einer Brennkraftmaschine**
Device and process for increasing the percentage of oxygen in the intake air of an IC engine
Dispositif et méthode pour augmenter la teneur d'oxygène de l'air d'admission d'un moteur à combustion interne

(30) Priorität: 20.10.2000 DE 10052102
(43) Veröffentlichungstag der Anmeldung: 02.05.2002
(73) Patentinhaber: Mann + Hummel GmbH, 71638 Ludwigsburg (DE)
(72) Erfinder: Hofacker, Oliver, 14199 Berlin (DE)
(74) Vertreter: Voth, Gerhard, Dipl.-Ing.

(56) Entgegenhaltungen:
- WO-A-00/15951
- DE-A- 19 543 884
- DE-A- 19 710 842
- GB-A- 2 345 866
- US-A- 5 636 619
- US-A- 5 649 517
- US-A- 5 908 023
- US-A- 5 960 777

## Beschreibung

### Stand der Technik

Die Erfindung betrifft eine Vorrichtung zur Anreicherung des Sauerstoffgehaltes in der Ansaugluft einer Brennkraftmaschine mit Hilfe einer Membran nach der Gattung des Patentanspruches 1. Außerdem betrifft die Erfindung ein Verfahren zum Betreiben dieser Vorrichtung nach der Gattung des Patentanspruches 9.

Vorrichtungen der eingangs beschriebenen Art sind bekannt. Gemäß der einzigen Figur der DE 197 01 840 A1 kann ein Ansaugtrakt 20 mit einem Nebenkanal 30 versehen werden, wobei in diesem eine sauerstoffdurchlässige Membran 32 angeordnet ist. Durch den Nebenkanal kann mit Sauerstoff angereicherte Luft dem Ansaugtrakt 20 zugeführt werden. Drosselorgane 24, 34 können unter Auswertung des Sauerstoffgehaltes der Ansaugluft mit Sensormitteln 50, 52 den Prozess der Sauerstoffanreicherung steuern.

Der Wirkungsgrad der beschriebenen Membran ist jedoch begrenzt. Daher kann nur ein mit Sauerstoff angereicherter Nebenstrom dem Hauptstrom des Luftansaugstroms zugeführt werden. Der Hauptstrom muss in bekannter Weise durch einen Luftfilter gereinigt werden. Gemäß der DE 197 10 840 A1, Spalte 4, Zeilen 4 bis 8, kann der Wirkungsgrad der Membran erhöht werden, wenn diese mithilfe eines Gebläses oder eines Kompressors gespült wird. Auf diese Weise wird die mit Sauerstoff angereicherte Luft auf der ansaugseitigen Seite der Membran durch Verbrennungsluft mit der ursprünglichen Konzentration an Sauerstoff ausgetauscht. Doch auch dieser Effekt kann den Wirkungsgrad der Membran nur begrenzt steigern.

Aus der WO 00/15951 A ist eine Vorrichtung zur Reduzierung von Dieselabgasen bekannt, welche ein Ansaugsystem, welches mit einer Membran kommuniziert bekannt. Dabei kommuniziert eine erste Seite der Membran mit dem Ansaugsystem und eine zweite Seite der Membran kommuniziert mit der Umgebungsluft. Weiterhin weist das System Mittel zur Druckbeeinflussung oder Umkehrung des an der Membran ohne diese Mittel anliegenden Druckunterschiedes auf.

Aufgabe der Erfindung ist es daher, eine Vorrichtung zur Anreicherung des Sauerstoffgehaltes in der Ansaugluft einer Brennkraftmaschine bzw. ein Verfahren zu deren Betrieb unter Verwendung einer Membran zu schaffen, mit dessen bzw. deren Hilfe eine möglichst große Anreicherung der Ansaugluft mit Sauerstoff möglich ist. Diese Aufgabe wird durch die Merkmale des Patentanspruches 1 sowie des Patentanspruches 9 gelöst.

### Vorteile der Erfindung

Die erfindungsgemäße Membran kommuniziert in bekannter Weise zum einen mit der Ansaugluft im Ansaugsystem, welche mit Sauerstoff angereichert werden soll, und auf der anderen Seite mit der Umgebungsluft, welche den selben Sauerstoffgehalt aufweist wie die nicht mit Sauerstoff angereicherte Ansaugluft. Weiterhin sind Mittel zur Beeinflussung des systembedingt ohne diese Mittel an der Membran anliegenden Druckunterschiedes zwischen den beiden Membranseiten vorgesehen ist. Mit dem systembedingten Druckunterschied ist derjenige Druckunterschied gemeint, der aufgrund des Ansaugverhaltens des Ansaugsystems zustande kommt. Durch die Luftansaugung der Brennkraftmaschine entsteht abhängig von deren Betriebszustand ein Unterdruck im Ansaugsystem. Die Anreicherungsleistung der Membran für den Sauerstoff im Ansaugsystem hängt vom Partialdruckunterschied derjenigen Partikel ab, für die die Membran durchlässig ist. Gemäß der DE 197 10 840 A1 sind dies die Sauerstoffmoleküle. Da die Konzentrationen der Luftbestandteile der Ansaugluft und der Umgebungsluft identisch sind, kann ein Partialdruckunterschied also durch einen absoluten Druckunterschied der Gase zwischen den beiden Membranseiten erzeugt werden. Dieser verbessert daher eine Anreicherung der Ansaugluft mit Sauerstoff.

Auch eine Maßnahme zur Steigerung des Wirkungsgrades der Membran, also der Anreicherungsleistung der Ansaugluft mit Sauerstoff, wie sie in der DE 197 10 840 A1 beschrieben ist, setzt ein grundsätzliches Anliegen eines Druckunterschiedes an der Membran voraus. Unter diesen Umständen wird die Ansaugluft auf der Ansaugseite der Membran so lange mit Sauerstoff angereichert, bis ein Gleichgewicht des Sauerstoffpartialdruckes auf beiden Seiten der Membran gegeben ist. Eine weitere Anreicherung der Ansaugluft kann nur erfolgen, wenn die ansaugseitige angereicherte Ansaugluft durch nicht angereicherte Ansaugluft ausgetauscht wird.

Dies bedeutet aber, dass in denjenigen Betriebszuständen der Brennkaftmaschine, bei denen durch die Brennkraftmaschine nur ein geringer Unterdruck erzeugt wird, nur eine geringe Anreicherung der Verbrennungsluft mit Sauerstoff möglich ist. Dies verhält sich bei der erfindungsgemäßen Vorrichtung anders. Durch das Mittel zur Beeinflussung des systembedingt anliegenden Druckunterschiedes wird gleichzeitig der Partialdruckunterschied der Teilchen erhöht, die durch die Membran transportiert werden sollen. Hierbei können insbesondere sauerstoffdurchlässige oder stickstoffdurchlässige Membranen verwendet werden. Bei sauerstoffdurchlässigen Membranen muss der Unterdruck auf der Seite des Ansaugsystems anliegen, um eine Wanderung der Sauerstoffmoleküle in die Ansaugluft zu gewährleisten. Die erfindungsgemäße stickstoffdurchlässige Membran kann verwendet werden, um der Ansaugluft Stickstoff zu entziehen, d. h. der Unterdruck muss auf der Seite der Membran anliegen, die dem Ansaugsystem abgewandt ist.

Diese Abscheideeffekte lassen sich auch nutzen, wenn die Membran nicht vollständig für die jeweils zurückzuhaltenden Gase durchlässig ist. Wichtig ist, dass insgesamt ein Anreicherungseffekt auf der gewünschten Seite der Membran zu erzielen ist.

Der systembedingt anliegende Druckunterschied wird durch die Funktion des Ansaugsystems vorgegeben. Im Falle einer sauerstoffdurchlässigen Membran muss der im Ansaugsystem vorliegende Unterdruck unter dem auf der anderen Seite der Membran herrschenden Überdruck vergrößert werden, um den Durchgang von Sauerstoff zu erhöhen. Im Falle der Verwendung einer erfindungsgemäßen stickstoffdurchlässigen Membran, muss das systembedingt an der durchlässigen Membran, muss das systembedingt an der Membran anliegende Druckverhältnis umgekehrt werden. Dies bedeutet, dass die Mittel zur Beeinflussung einen größeren Unterdruck auf der dem Ansaugsystem abgewandten Seite der Membran erzeugen müssen, als im Ansaugsystem vorliegt. Nur unter dieser Voraussetzung kommt es zu einer Wanderung von Stickstoff durch die Membran.

Als Ansaugluft wird die gesamte im Ansaugsystem befindliche Luft bezeichnet. Dies kann evtl. auch Luft sein, welche sich in Totvolumina wie Resonatoren oder Nebenleitungen befindet. Die Membranen können in ihrer Geometrie beliebig ausgeführt sein. Es ist beispielsweise möglich, schlauchförmige oder hohlfaserförmige Membranen zu nutzen, durch die der Ansaugstrom der Luft geleitet wird. Diese können im Hauptstrom und im Nebenstrom angeordnet sein. Eine andere Möglichkeit ist die flächige Ausbildung der Membranen, die z. B. in den Wandungen des Ansaugsystems untergebracht sein können.

Gemäß einer weiteren Ausgestaltung der Erfindung weist das Mittel zur Beeinflussung des Druckunterschiedes zwischen den beiden Seiten der Membran mindestens einen Anschluss für mindestens eine weitere Funktion auf. Hierdurch kann eine Funktionsintegration erreicht werden, die Kostenvorteile für die Produktion der Vorrichtung bringt. Es lassen sich z. B. Pumpen für den Unterdruckspeicher eines Bremskraftverstärkers oder für die Betätigung von Unterdruckdosen nutzen. Eine andere Möglichkeit besteht in der Nutzung eines Kompressors, welcher Druckluft für andere Aggregate der Brennkraftmaschine bzw. des zugehörigen Fahrzeugs produziert. Damit entsteht vorteilhafterweise durch die Vergrößerung des Druckunterschiedes an der Membran nur ein unwesentlicher Mehraufwand, wodurch die Lösungen wirtschaftlicher werden.

Gemäß einer besonderen Ausgestaltung der Erfindung kann zur Vergrößerung oder Umkehrung des Druckunterschiedes ein Sekundärluftlader verwendet werden, der ansonsten zur Versorgung eines Abgastraktes der Brennkraftmaschine mit Sekundärluft ausgeführt ist. Diese Ausgestaltung ist besonders vorteilhaft, da die Sekundärlufteinblasung in den Abgastrakt der Brennkraftmaschine lediglich in den ersten Betriebsminuten der Brennkraftmaschine erfolgen muss, um zu einer schnelleren Aufheizung des Katalysators und zu einer Reinigung des Abgases zu führen. Ein solcher Sekundärluftlader ist z. B. in der Patentanmeldung mit dem Aktenzeichen 100 05 888 beschrieben. Sobald nach dem Start der Brennkraftmaschine die Sekundärlufteinblasung abgeschlossen wird, steht der Sekundärluftlader gemäß der erfinderischen Weiterbildung zur Anreicherung der Ansaugluft mit Sauerstoff zur Verfügung. Durch Einsparung eines weiteren Mittels zur Beeinflussung des Druckunterschiedes an der Membran verringert sich auch die Masse des Kraftfahrzeugs. Damit wird die Kraftmaschine wirtschaftlicher und umweltfreundlicher im Betrieb.

Eine besondere Ausgestaltung der Erfindung sieht vor, dass der Sekundärluftlader durch eine im Ansaugsystem angeordnete Turbine angetrieben wird. Diese Turbine kann insbesondere parallel zur Drosselklappe angeordnet werden, so dass die bei der Drosselung des Ansaugsystems verbrauchte Energie zum Antrieb des Sekundärluftladers verwendet werden kann. Hierdurch lässt sich eine besonders Energie sparende Variante der Erfindung erzeugen, bei der die Anreicherung der Ansaugluft ohne zusätzlichen Energieaufwand betrieben werden kann.

Eine weitere Variante der Erfindung sieht vor, als Mittel zur Beeinflussung des Druckunterschieds zwischen den Membranseiten einen Lader zu nutzen, der zur Verdichtung der Ansaugluft vorgesehen ist. Dieser kann z. B. als Abgasturbolader oder als Kompressor ausgeführt sein. Bei der Verwendung von Kompressoren kann man sich beispielsweise den Umstand zunutze machen, dass diese in bestimmten Betriebszuständen der Brennkraftmaschine eine zu große Luftmenge fördern. Diese kann zum Aufbau eines Druckgefälles an der Membran verwendet werden, wobei Sauerstoffmoleküle in die Ansaugluft übergehen. Die Überproduktion des Kompressors kann anschließend in die Umgebung entspannt werden. Ein Abgasturbolader oder Kompressor vergrößert die im Ansaugtrakt anliegenden Drücke ohnehin. Dies kann vorteilhaft dazu genutzt werden, im verdichteten Bereich des Ansaugtraktes eine stickstoffdurchlässige Membran unterzubringen, wodurch ein Austrag von Stickstoffmolekülen aus der Ansaugluft beschleunigt wird.

Die mit Sauerstoff angereicherte Luft kann vorteilhaft auch zur Sekundärlufteinblasung verwendet werden. Dies steigert die Oxidationsrate bei gleichbleibender Sekundärluftmenge, wodurch der Abgaskatalysator schneller erwärmt wird, da das Abgas weniger abgekühlt wird. Die Kaltstartphase des Motors kann dadurch verkürzt werden. Über ein Regelventil kann zusätzlich Luft dem Ansaugtrakt entnommen werden, wenn der von der Membran stammende Sauerstoff nicht ausreicht.

Ein Verfahren zum Betreiben der beschriebenen Vorrichtung sieht vor, dass der Grad der Sauerstoffanreicherung indirekt durch die Höhe des an der Membran anliegenden Druckunterschiedes ermittelt wird. Dies setzt voraus, dass die Abscheidevorgänge an der Membran in Abhängigkeit vom Druckunterschied bekannt sind. Auf diese Weise lässt sich der für die Einstellung des Massestroms der Ansaugluft notwendige Sauerstoffgehalt einstellen. Wichtig zur Steuerung des Verbrennungsprozesses in der Brennkraftmaschine ist nämlich der absolute Betrag an Sauerstoffmolekülen, um mit dem Kraftstoff ein optimales Gemisch zu ergeben.

Selbstverständlich können zur Ermittlung des Sauerstoffgehaltes in der Ansaugluft entsprechende Sauerstoffsensoren genutzt werden. Weiterhin ist die Verwendung von Drucksensoren und Mengendurchflusssensoren sinnvoll. Die notwendige Auswertung für den Betriebszustand der Brennkraftmaschine kann durch eine Kombination der genannten Sensoren erfolgen.

Ein besonderes Verfahren zum Betreiben der Vorrichtung ergibt sich für die Ausführung mit einem Verdichter als Sekundärluftlader, der durch eine Turbine im Ansaugsystem angetrieben wird. Der geforderte Gesamtluftstrom der Brennkraftmaschine wird abhängig vom Betriebszustand durch das Zusammenspiel einer Drosselung der Turbine und der Drosselklappe im Hauptstrom des Ansaugsystems erzeugt. Hier ergeben sich bestimmte Gesetzmäßigkeiten, welche gezielt zur Erzeugung eines Druckunterschiedes an der Membran genutzt werden können. Dies liegt an der mechanischen Kopplung zwischen Turbine und Verdichter, so dass bei bestimmter Stellung des Drosselorganes der Turbine die Verdichterleistung und damit das Druckgefälle an der Membran vorhersagbar ist. Auf diese Weise lässt sich ein selbstregelndes System erzeugen, wodurch umständliche und kostenaufwendige Sensoren zur Überwachung des Prozesses eingespart werden können.

Eine andere Möglichkeit für die Bestimmung des Sauerstoffgehaltes in der Ansaugluft besteht in der Messung der beiden Teilvolumenströme im Ansaugtrakt der Brennkraftmaschine und der durch die Membran geförderten Teilchen. Werden diese beiden Luftströme ins Verhältnis gesetzt, kann eine Aussage über den Sauerstoffgehalt gemacht werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: die Anordnung einer sauerstoffdurchlässigen Membran in einem Ansaugsystem mit Sekundärluftpumpe,
- Figur 2: die Anordnung einer sauerstoffdurchlässigen Membran in einem Ansaugsystem mit Sekundärluftlader, bestehend aus Verdichter und Turbine,
- Figur 3: die Anordnung einer stickstoffdurchlässigen Membran im Ansaugsystem mit einem Sekundärluftlader gemäß Figur 2,
- Figur 4: die Anordnung einer sauerstoffdurchlässigen Membran in einem Ansaugsystem mit Kompressor und
- Figur 5: die Anordnung einer stickstoffdurchlässigen Membran in einem Ansaugsystem mit Abgasturbolader.

### Beschreibung der Ausführungsbeispiele

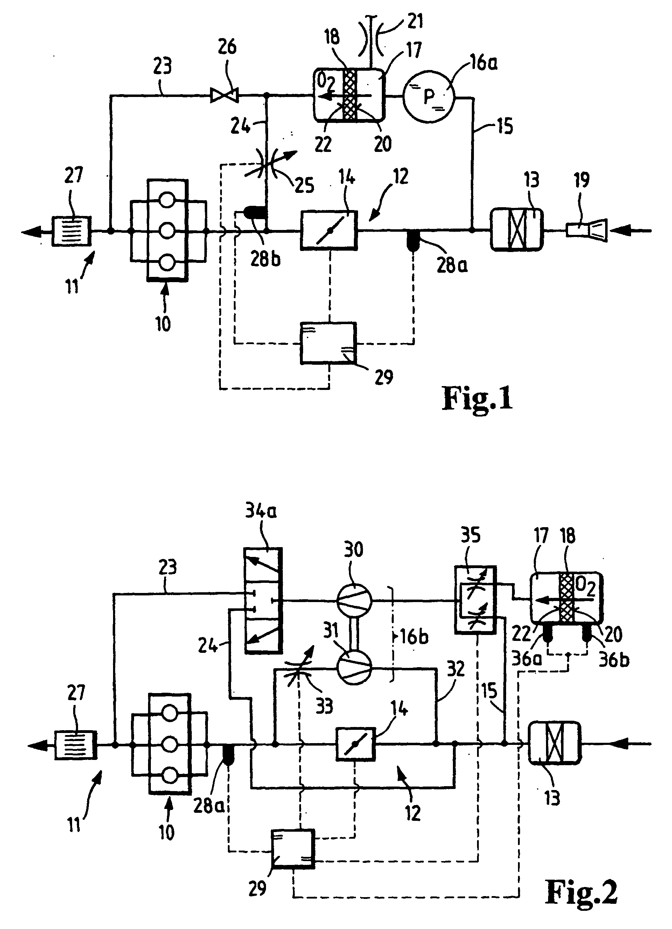

In Figur 1 ist schematisch eine Brennkraftmaschine 10 mit einem Abgastrakt 11 und einem Ansaugsystem 12 dargestellt. Im Ansaugsystem ist ein Luftfilter 13, eine Drosselklappe 14 für die Ansaugluft und eine Entnahmeleitung 15 für einen als Pumpe ausgeführten Sekundärluftlader 16a vorgesehen. Der Sekundärluftlader 16a versorgt eine in einem Gehäuse 17 angebrachte, sauerstoffdurchlässige Membran 18 mit Sekundärluft. Der Sekundärluftlader baut im Gehäuse 17 einen Überdruck auf, der eine Wanderung von Sauerstoffmolekülen in Richtung des angedeuteten Pfeiles auf die andere Seite der Membran bewirkt. Um einen Austausch der Sekundärluft mit vermindertem Sauerstoffgehalt auf einer zweiten Seite 20 der Membran zu gewährleisten, ist im Gehäuse eine gedrosselte Öffnung 21 vorgesehen. Die zweite Seite kommuniziert über den Ansaugtrakt mit der durch einen Ansaugstutzen 19 angesaugten und gefilterten Umgebungsluft.

Eine erste Seite 22 der Membran, auf der sich Sauerstoff oder zumindest stark mit Sauerstoff angereicherte Luft befindet, kommuniziert zum einen mit einer Sekundärluftleitung 23, zum anderen mit einer Zuführleitung 24 zur Einleitung von mit Sauerstoff angereicherter Luft in das Ansaugsystem 12. Damit kommuniziert die erste Seite direkt mit dem Ansaugsystem, sobald ein Drosselventil 25 geöffnet wird. Auf diese Weise ist eine Anreicherung der Ansaugluft mit Sauerstoff möglich. Wird das Drosselventil 25 jedoch geschlossen und ein Absperrventil 26 geöffnet, so erfolgt eine Einleitung von Sekundärluft in den Abgastrakt 11 der Brennkraftmaschine vor einem Katalysator 27.

Der Massestrom der Ansaugluft wird im Ansaugtrakt 12 mit einem Massestromsensor 28a und der Strom der Sekundärluft mit bekanntem Sauerstoffgehalt durch einen Massestromsensor 28b gemessen und in einer Steuerung 29 ausgewertet. Die Steuerung koordiniert das Zusammenspiel zwischen Drosselklappe 14 und Drosselventil 25, wodurch die Anreicherung der Ansaugluft mit sauerstoffangereicherter Luft und damit die Sauerstoffkonzentration der bei der Brennkraftmaschine ankommenden Ansaugluft eingestellt werden kann.

Bei den Figuren 2 bis 5 sind entsprechende Bauteile mit den selben Bezugszahlen gekennzeichnet wie in Figur 1. Diese werden nicht gesondert beschrieben.

Die Vorrichtung gemäß Figur 2 weist als Sekundärluftlader 16b einen Verdichter 30 auf, der durch eine Turbine 31 angetrieben wird. Die Turbine wird über eine Umgehungsleitung 32 zur Umgehung der Drosselklappe 14 im Ansaugsystem 12 mit Ansaugluft versorgt. Weiterhin ist in der Umgehungsleitung 32 ein Drosselorgan 33 vorgesehen. Durch das Zusammenspiel aus Drosselorgan 33 und Drosselklappe 14 kann der Volumenstrom der Ansaugluft eingestellt werden. Der Luftmassesensor 28a führt der Steuerung Informationen über den aktuellen Volumenstrom der Ansaugluft zu.

Der Sekundärluftlader 16b lässt sich für zwei Funktionen der Brennkraftmaschine nutzen. Abhängig von der Stellung eines Schaltventils 34a und eines Drosselmoduls 35 wird dem Abgastrakt 11 entsprechend der üblichen Funktion des Sekundärluftladers Sekundärluft zugeführt, die entweder dem Ansaugtrakt über die Entnahmeleitung 15 oder der Membran 18 entnommen werden kann. Außerdem kann mit Sauerstoff angereicherte Luft aus dem Gehäuse 17 über die Zuführleitung 24 der Ansaugluft zugeführt werden. Um ein Maß über den Grad der Sauerstoffanreicherung zu erhalten, sind im Gehäuse Drucksensoren 36a und b angebracht, wobei der an der Membran 18 anliegende Differenzdruck als Maß für die geförderte, mit Sauerstoff angereicherte Luft bzw. den ausgefilterten Luftsauerstoff herangezogen wird. Die gewünschte Zusammensetzung der Ansaugluft und deren benötigte Menge kann also durch Beeinflussung des Drosselorgans 33, der Drosselklappe 14 und des Drosselmoduls 35 erfolgen.

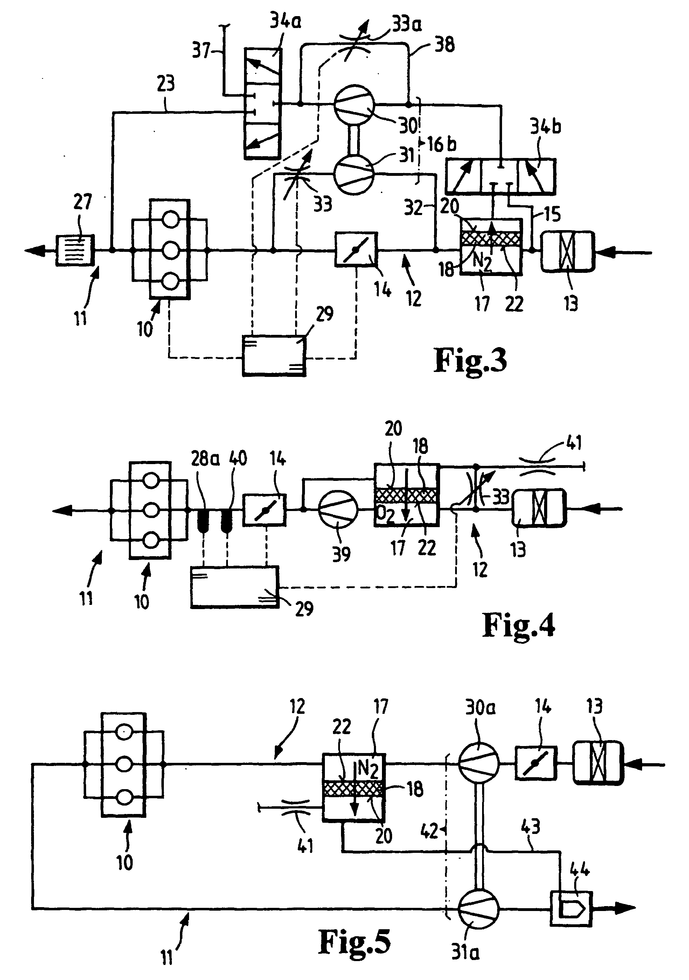

Figur 3 stellt die Anwendung einer stickstoffdurchlässigen Membran in der Vorrichtung dar. Die erste Seite 22 im Gehäuse 17 stellt einen Teil des Ansaugsystems 12 dar. Damit wird diese Seite von der Ansaugluft bestrichen, wodurch der Stickstoffpartialdruck an der ersten Seite der Membran konstant gehalten wird. Über die Schaltventile 34a, 34b kann neben der zu Figur 2 beschriebenen Funktion der Sekundärlufteinleitung in den Abgastrakt 11 über die Entnahmeleitung 15 und die Sekundärluftleitung 23 ein Absaugen des Stickstoffes oder der mit Stickstoff angereicherten Luft auf der zweiten Seite 20 der Membran erfolgen, die durch den Verdichter 30 über eine Entspannungsleitung 37 in die Umgebung gepumpt wird. Hierdurch wird ein Partialdruckunterschied für den Stickstoff auf den beiden Seiten der Membran erzeugt, welcher zu einer Verminderung des Stickstoffgehaltes der Ansaugluft und somit zu einer Anreicherung mit Sauerstoff führt.

In der Vorrichtung gemäß Figur 3 wird die Funktion der Vorrichtung aufgrund bekannter Gesetzmäßigkeiten zwischen den Stellungen von Drosselklappe 14, Drosselorgan 33 und Drosselorgan 33a bestimmt. Durch eine Verstellung dieser Ventile können bei bekanntem Betriebszustand der Brennkraftmaschine 10 Aussagen über den Volumenstrom der Ansaugluft und deren Sauerstoffgehalt auch ohne zusätzliche Sensoren gemacht werden. Die Funktion von Drosselorgan 33 und Drosselklappe 14 ist in diesem Zusammenhang bereits beschrieben worden. Das Drosselorgan 33a ist in einer Kurzschlussleitung 38 untergebracht, welche die durch den Verdichter 30 komprimierte Luft wieder auf der Saugseite des Verdichters zuführt. Da die Leistung der Turbine 31 durch das Zusammenspiel der Drosselklappe 14 und des Drosselorgans 33 vorgegeben ist, kann auf diese Weise die effektiv durch den Verdichter 30 geförderte Luft bzw. der Unterdruck an der zweiten Seite der Stickstoffmembran beeinflusst werden.

Figur 4 stellt eine Vorrichtung dar, bei der in dem Ansaugsystem 12 ein Kompressor 39 zur Verdichtung der Ansaugluft vorgesehen ist. Dieser produziert in bestimmten Betriebszuständen eine Überkapazität, welche abgebaut werden muss, um die Brennkraftmaschine innerhalb der zulässigen Grenzen zu belasten. In diesen Betriebszuständen kann der Kompressor genutzt werden, um im Gehäuse 17 einer sauerstoffdurchlässigen Membran 18 auf der zweiten Seite einen Überdruck zu zeugen. Hierdurch werden Sauerstoffmoleküle in das Ansaugsystem gedrückt, welches auf der ersten Seite 22 der Membran angeordnet ist. Über das Drosselorgan 33 kann die rückgeführte komprimierte Luft mithilfe der Steuerung 29 eingestellt werden, wobei die Membran umgangen wird. Zusätzlich ist eine gedrosselte Öffnung 41 vorgesehen, durch die die komprimierte Luft in die Umgebung entspannt werden kann, wodurch bei vollständig geschlossenem Drosselorgan 33 ein Luftaustausch auf der zweiten Seite 20 der Membran 18 gewährleistet wird. Im Ansaugsystem sind zusätzlich ein Luftmassesensor 28a und ein Sauerstoffsensor 40 vorgesehen. Die hier gemessenen Werte werden durch die Steuerung 29 ausgewertet, wodurch Aussagen über den Volumenstrom und den Sauerstoffgehalt der Ansaugluft möglich sind.

Figur 5 stellt eine Vorrichtung dar, in der im Ansaugsystem 12 ein als Abgasturbolader ausgeführter Lader 42 vorgesehen ist. Dieser besitzt eine Turbine 31a im Abgastrakt 11 und einen Verdichter 30a im Ansaugsystem. Die stickstoffdurchlässige Membran 18 ist mit der ersten Seite 22 auf der Druckseite des Verdichters 30a im Ansaugsystem 12 untergebracht. Die zweite Seite 20 ist mit einer Saugleitung 43, die in eine Saugstrahlpumpe 44 mündet, verbunden. Die Saugstrahlpumpe ist im Abgastrakt hinter der Turbine angeordnet und erzeugt auf der zweiten Seite der Membran einen Unterdruck. Hierdurch wird durch die gedrosselte Öffnung 41 Frischluft in das Gehäuse 17 gesogen, wodurch der Partialdruckunterschied an der Membran 18 positiv beeinflusst wird. Die gedrosselte Öffnung 41 kann jedoch auch weggelassen werden. Unter dieser Voraussetzung wird der durch die Membran 18 gedrungene Stickstoff aufgrund der Saugwirkung der Saugstrahlpumpe abtransportiert und durch den Abgastrakt ausgestoßen. Eine andere Möglichkeit besteht darin, die Saugleitung 43 wegzulassen. Unter dieser Voraussetzung wird der Stickstoff über die gedrosselte Öffnung 41 abgeführt.

## Patentansprüche

1. Vorrichtung zur Anreicherung des Sauerstoffgehaltes in der Ansaugluft einer Brennkraftmaschine, aufweisend ein Ansaugsystem (12) für die Ansaugluft, das mit einer ersten Seite (22) einer Membran (18) kommuniziert, wobei eine zweite Seite (20) der Membran (18) mit der Umgebungsluft kommuniziert, wobei Mittel zur Beeinflussung, insbesondere zur Vergrößerung beziehungsweise zur Umkehrung des systembedingt ohne diese Mittel an der Membran (18) anliegenden Druckunterschiedes zwischen der ersten und zweiten Seite vorgesehen sind, **dadurch gekennzeichnet, dass** die Membran für Sauerstoff zumindest weitgehend undurchlässig ist und für mindestens einen anderen Bestandteil der Ansaugluft, insbesondere Stickstoff durchlässig ist, wobei auf der ersten Seite (22) der Membran (18) ein höherer Druck anliegt als auf der zweiten Seite (20).

2. Vorrichtung nach einem der vorherigen Ansprüche, **dadurch gekennzeichnet, dass** das Mittel zur Beeinflussung des Druckunterschiedes zwischen der ersten und zweiten Seite der Membran (18) mindestens einen Druckanschluss für mindestens eine weitere Funktion aufweist.

3. Vorrichtung nach Anspruch 2, **dadurch gekennzeichnet, dass** das Mittel zur Beeinflussung des Druckunterschiedes zwischen der ersten und zweiten Seite der Membran (18) gleichzeitig als Sekundärluftlader (16a,b) zur Versorgung eines Abgastraktes (11) der Brennkraftmaschine mit Sekundärluft ausgeführt ist.

4. Vorrichtung nach Anspruch 3, **dadurch gekennzeichnet, dass** für den Sekundärluftlader (16a,b) eine im Ansaugsystem (12) angeordnete Turbine (31, 31a) als Antrieb vorgesehen ist.

5. Vorrichtung nach Anspruch 2, **dadurch gekennzeichnet, dass** die Mittel zur Beeinflussung des Druckunterschiedes zwischen der ersten und zweiten Seite der Membran (18) gleichzeitig als ein zur Verdichtung der Ansaugluft vorgesehener Lader (42) ausgeführt ist.

6. Verfahren zum Betreiben einer Vorrichtung gemäß einem der vorherigen Ansprüche, **dadurch gekennzeichnet, dass** der Grad der Sauerstoffanreicherung der Ansaugluft durch die Höhe des an der Membran (18) anliegenden Druckunterschiedes eingestellt wird.

7. Verfahren nach Anspruch 6 für eine Vorrichtung nach Anspruch 3, **dadurch gekennzeichnet, dass** die Turbine (31, 31a) parallel zu einer Drosselklappe (14) zur Regulierung des Hauptstromes des Ansaugluftstromes angeordnet ist und der Nebenluftstrom des Ansaugluftstromes durch die Turbine über ein mit der Turbine in Reihe geschaltetes Drosselorgan (33, 33a) reguliert wird, wobei der Gesamtluftstrom der Ansaugluft durch ein Zusammenspiel von Drosselklappe (14) und Drosselorgan (33, 33a) eingestellt wird und durch den Nebenluftstrom die Antriebsleistung der Turbine und damit der durch den Sekundärluftlader an der Membran anliegende Druckunterschied eingestellt wird.

8. Verfahren nach einem der Ansprüche 6 oder 7, **dadurch gekennzeichnet, dass** der Sauerstoffgehalt in der Ansaugluft durch das Verhältnis der Volumenströme der Ansaugluft und der durch die Membran geleiteten Luft bestimmt wird.

9. Verfahren nach einem der Ansprüche 6 bis 8, **dadurch gekennzeichnet, dass** die durch die Membran (18) mit Sauerstoff angereicherte Luft auch zur Sekundärlufteinblasung genutzt wird.

## Claims

1. Apparatus for enriching the oxygen content in the intake air of an intemal combustion engine, having an intake system (12) for the intake air, which communicates with a first side (22) of a membrane (18), wherein a second side (20) of the membrane (18) communicates with the ambient air, wherein means are provided for influencing, more especially for increasing or respectively reversing the pressure difference between the first and second side, said pressure difference being present at the membrane without these means on account of the system, **characterised in that** the membrane is at least substantially impermeable to oxygen and is permeable for at least one other constituent of the intake air, more especially nitrogen, wherein the pressure on the first side (22) of the membrane (18) is higher than the pressure on the second side (20).

2. Apparatus according to one of the preceding claims, **characterised in that** the means for influencing the pressure difference between the first side and the second side of the membrane (18) has at least one pressure connection for at least one other function.

3. Apparatus according to claim 2, **characterised in that** the means for influencing the pressure difference between the first side and the second side of the membrane (18) is configured at the same time as secondary air charger (16a,b) for supplying an exhaust duct (11) of the internal combustion engine with secondary air.

4. Apparatus according to claim 3, **characterised in that** a turbine (31, 31 a), which is disposed in the intake system (12), is provided as driving means for the secondary air charger (16a,b).

5. Apparatus according to claim 2, **characterised in that** the means for influencing the pressure difference between the first side and the second side of the membrane (18) is configured at the same time as a charger (42) provided for compressing the intake air.

6. Method for operating an apparatus according to one of the preceding claims, **characterised in that** the degree of oxygen enrichment of the intake air is adjusted through the level of the pressure difference present at the membrane (18).

7. Method according to claim 6 for an apparatus according to claim 3, **characterised in that** the turbine (31, 31a) is disposed parallel to a throttle valve (14) for regulating the main flow of the intake air flow and the secondary air flow of the intake air flow is regulated by the turbine via a throttle member (33, 33a) which is connected in series to the turbine, the entire air flow of the intake air being adjusted by an interaction between throttle valve (14) and throttle member (33, 33a) and the driving output of the turbine and consequently the pressure difference present at the membrane caused by the secondary air charger being adjusted via the secondary air flow.

8. Method according to one of claims 6 or 7, **characterised in that** the oxygen content in the intake air is determined by the ratio between the volume flows of the intake air and the air conducted through the membrane.

9. Method according to one of claims 6 to 8, **characterised in that** the air enriched with oxygen through the membrane (18) is also used for secondary air injection.

## Revendications

1. Dispositif pour augmenter la teneur en oxygène de l'air d'admission d'un moteur à combustion interne, présentant un système d'admission (12) pour l'air d'admission, qui communique avec un premier côté (22) d'une membrane (18), un deuxième côté (20) de la membrane (18) communiquant avec l'air environnant, des moyens étant prévus pour influencer, en particulier pour augmenter ou inverser la différence de pression entre le premier et le deuxième côté, appliquée en fonction du système sur la membrane (18) en l'absence de ces moyens,
**caractérisé en ce que**
la membrane est au moins pour l'essentiel imperméable à l'oxygène et est perméable à au moins un autre composant de l'air d'admission, en particulier l'azote, la pression régnant sur le premier côté (22) de la membrane (18) étant plus élevée que celle régnant sur le deuxième côté (20).

2. Dispositif selon la revendication 1,
**caractérisé en ce que**
le moyen permettant d'influencer la différence de pression entre le premier et le deuxième côté de la membrane (18) présente au moins un raccord de pression pour au moins une autre fonction.

3. Dispositif selon la revendication 2,
**caractérisé en ce que**
le moyen permettant d'influencer la différence de pression entre le premier et le deuxième côté de la membrane (18) est configuré dans le même temps en tant que compresseur de suralimentation d'air secondaire (16a, b), servant à alimenter la section des gaz d'échappement (11) du moteur à combustion interne avec de l'air secondaire.

4. Dispositif selon la revendication 3,
**caractérisé en ce qu'**
il est prévu pour le compresseur de suralimentation d'air secondaire (16a, b) une turbine (31, 31a) disposée dans le système d'admission (12) en tant qu'élément d'entraînement.

5. Dispositif selon la revendication 2,
**caractérisé en ce que**
les moyens permettant d'influencer la différence de pression entre le premier et le deuxième côté de la membrane (18) sont dans le même temps configurés en tant que compresseur de suralimentation (42) prévu pour comprimer l'air d'admission.

6. Procédé de fonctionnement d'un dispositif selon l'une des revendications précédentes,
**caractérisé en ce que**
le degré d'enrichissement en oxygène de l'air d'admission est déterminé par la hauteur de la différence de pression régnant au niveau de la membrane (18).

7. Procédé selon la revendication 6 pour un dispositif selon la revendication 3,
**caractérisé en ce que**
la turbine (31, 31a) est disposée parallèlement à un papillon des gaz (14) permettant de réguler l'écoulement principal du flux d'air d'admission, et le flux d'air secondaire du flux d'air d'admission est régulé par la turbine par un organe d'étranglement (33, 33a) monté en ligne avec la turbine, le flux d'air total de l'air d'admission étant réglé par une coordination entre le papillon des gaz (14) et l'organe d'étranglement (33, 33a) et le flux d'air secondaire permettant de régler la puissance d'entraînement de la turbine et également la différence de pression qui s'applique au niveau de la membrane par le compresseur de suralimentation d'air secondaire.

8. Procédé selon l'une des revendications 6 ou 7,
**caractérisé en ce que**
la teneur en oxygène de l'air d'admission est déterminée par le rapport entre les débits volumiques de l'air d'admission et de l'air dirigé par la membrane.

9. Procédé selon l'une des revendications 6 à 8,
**caractérisé en ce que**
l'air enrichi en oxygène par la membrane (18) est également utilisé pour l'injection d'air secondaire.
